# EUROPEAN PATENT APPLICATION

(11) **EP 2 564 697 A1**
(43) Date of publication of application: **06.03.2013**
(21) Application number: 11179168.7
(22) Date of filing: 29.08.2011
(51) Int. Cl.: A01N 43/40, A01N 47/34, A01N 43/54, A01P 7/00, A01P 7/04

(54) **Methods of controlling insects**

(71) Applicant: Syngenta Participations AG, 4058 Basel (CH)
(72) Inventor: The designation of the inventor has not yet been filed
(74) Representative: Arunasalam, Velautha-Cumaran

(57) **Abstract**

The invention relates to a method of controlling insects in the family *Curculionidae*, using at least one active ingredient selected from (I) N-(cyanomethyl)-4-(trifluoromethyl)-3-pyridinecarboxamide (flonicamid), (II) N-[[[2,5-Dichloro-4-(1,1,2,3,3,3-hexafluoropropoxy)phenyl]amino]carbonyl] -2,6-difluorobenzamide (Iufenuron) and (III)1-acetyl-3,4-dihydro-3-[(3-pyridinylmethyl)amino]-6-[1,2,2,2-tetrafluoro-1- (trifluoromethyl)ethyl]-2(1H)-quinazolinone (pyrifluquinazon) in free form or in agrochemically acceptable salt form.

## Description

This invention relates to a method of controlling insects, which comprises applying at least one active ingredient to insects of the family *Curculionidae.*

Insects of the *Curculionidae* family (commonly known as weevils) are almost entirely plant feeders. Several members of this family, in particular members of the genus *Anthonomus,* are known to be important agronomic pests in a variety of commercially important flowering crops and flowering ornamental plants. Weevils are known to attack, *inter alia,* cotton, apple, hazelnut, oil seed rape, strawberry and pepper crops.

Benchmark active ingredients which have so far been used to control members of the *Curculionidae,* in particular *Anthonomus,* suffer several disadvantages. One of these, endosulfan, has been banned in over 80 countries due to its threat to human health and the environment. Pyrethroids such as cyfluthrin and betacyfluthrin are less effective now due to the appearance of resistance. Thus, there is a clear need to find insecticides which can be used to control *Curculionidae,* in particular *Anthonomus.*

It is highly surprising that it has now been found that each active ingredient of formula (I) corresponding to N-(cyanomethyl)-4-(trifluoromethyl)-3-pyridinecarboxamide, formula (II) corresponding to N-[[[2,5-Dichloro-4-(1,1,2,3,3,3-hexafluoropropoxy)phenyl]amino]carbonyl]-2,6-difluorobenzamide and formula (II) corresponding to 1-acetyl-3,4-dihydro-3-[(3-pyridinylmethyl)amino]-6-[1,2,2,2-tetrafluoro-1-(trifluoromethyl)ethyl]-2(1H)-quinazolinone, either alone or in any combination, is particularly efficacious at controlling insects from the family *Curculionidae.*

The invention relates to a method of controlling insects, which comprises applying at least one active ingredient selected from (I) to (III) to insects of the family *Curculionidae,* wherein:
(I) formula (I) corresponding to N-(cyanomethyl)-4-(trifluoromethyl)-3-pyridinecarboxamide (flonicamid); 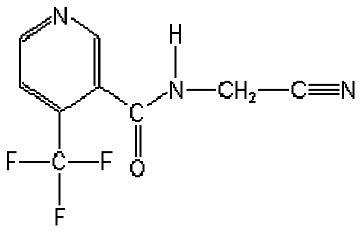
(II) formula (II) corresponding to N-[[[2,5-Dichloro-4-(1,1,2,3,3,3-hexafluoropropoxy)phenyl]amino]carbonyl]-2,6-difluorobenzamide (lufenuron); and 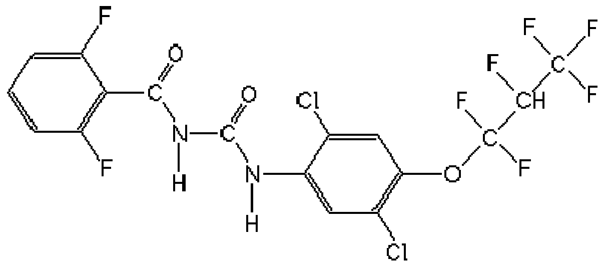
(III) formula (III) corresponding to 1-acetyl-3,4-dihydro-3-[(3-pyridinylmethyl)amino]-6-[1,2,2,2-tetrafluoro-1-(trifluoromethyl)ethyl]-2(1H)-quinazolinone (pyrifluquinazon).

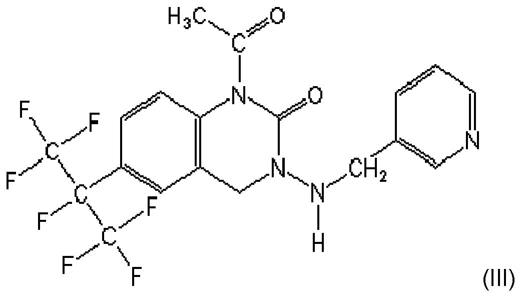

Active ingredients of formulas (I), (II) and (III) can be in free form or in an agrochemically acceptable salt form.

The invention also encompasses the use of a composition comprising at least one active ingredient selected from (I) to (III) for controlling insects of the *Curculionidae* family.

In an embodiment, independent of any other embodiments, the method comprises applying at least any two active ingredients selected from (I) to (III), or a composition thereof.

In an embodiment, independent of any other embodiments, the method comprises applying the active ingredients (I), (II) and (III), or a composition thereof.

Independently of the active ingredients (I) to (III), their combinations and the corresponding compositions thereof, the insects of the *Curculionidae* family are selected from *Conotrachelus nenuphar, Curculio nucum* and of the genus *Ceutorhynchus* and of the genus *Anthonomus,* in particular the species *Anthonomus grandis* (cotton boll weevil).

Methods of preparing such active ingredients and compositions for use in controlling *Curculionidae* are also provided. In one embodiment, a composition comprising the active ingredient of formula (I) is used for controlling A. *grandis.* In one embodiment, a composition comprising active ingredients of formula (I) and formula (II) in combination is used for controlling A. *grandis.* In one embodiment, a composition comprising active ingredients of formula (I) and formula (III) in combination is used for controlling A. *grandis.* In one embodiment, a composition comprising active ingredients of formula (II) and formula (III) in combination is used for controlling A. *grandis.* In particular, the invention relates to the use of active ingredients selected from formula (I), formula (II) and formula (III) either alone or in any combination; and to a composition comprising the active ingredients selected from formula (I), formula (II) and formula (III) either alone or in combination in controlling such insects in crops of useful plants, in particular cotton plants.

The present invention makes use of the unexpected finding that each of N-(cyanomethyl)-4-(trifluoromethyl)-3-pyridinecarboxamide, N-[[[2,5-Dichloro-4-(1,1,2,3,3,3-hexafluoropropoxy)phenyl]amino]carbonyl]-2,6-difluorobenzamide and 1-acetyl-3,4-dihydro-3-[(3-pyridinylmethyl)amino]-6-[1,2,2,2-tetrafluoro-1-(trifluoromethyl)ethyl]-2(1H)-quinazolinone, either alone or in any combination, is effective at controlling *Curculionidae.* This invention therefore addresses this problem and also provides an alternative method of control to the benchmark active ingredients.

The present invention provides a method of controlling insects, which comprises applying at least one active ingredient selected from (I) N-(cyanomethyl)-4-(trifluoromethyl)-3-pyridinecarboxamide, (II) N-[[[2,5-Dichloro-4-(1,1,2,3,3,3-hexafluoropropoxy)phenyl]amino]carbonyl]-2,6-difluorobenzamide and (III) 1-acetyl-3,4-dihydro-3-[(3-pyridinylmethyl)amino]-6-[1,2,2,2-tetrafluoro-1-(trifluoromethyl)ethyl]-2(1H)-quinazolinone, either alone or in any combination, in free form or in agrochemically acceptable salt form to insects of the *Curculionidae* family. Independent of the active ingredients (I) to (III), in a preferred embodiment, the *Curculionidae* insects are selected from *Conotrachelus nenuphar, Ceutorhynchus spp., Curculio nucum* and insects from the genus *Anthonomus,* in particular the species A. *grandis.*

In one embodiment, a method of the invention comprises applying the active ingredient N-(cyanomethyl)-4-(trifluoromethyl)-3-pyridinecarboxamide.

In one embodiment, a method of the invention comprises applying the active ingredient N-(cyanomethyl)-4-(trifluoromethyl)-3-pyridinecarboxamide in combination with N-[[[2,5-Dichloro-4-(1,1,2,3,3,3-hexafluoropropoxy)phenyl]amino]carbonyl]-2,6-difluorobenzamide.

In one embodiment, a method of the invention comprises applying the active ingredient N-[[[2,5-Dichloro-4-(1,1,2,3,3,3-hexafluoropropoxy)phenyl]amino]carbonyl]-2,6-difluorobenzamide.

In one embodiment, a method of the invention comprises applying the active ingredient 1-acetyl-3,4-dihydro-3-[(3-pyridinylmethyl)amino]-6-[1,2,2,2-tetrafluoro-1-(trifluoromethyl)ethyl]-2(1H)-quinazolinone.

In one embodiment, a method of the invention comprises applying the active ingredient 1-acetyl-3,4-dihydro-3-[(3-pyridinylmethyl)amino]-6-[1,2,2,2-tetrafluoro-1-(trifluoromethyl)ethyl]-2(1H)-quinazolinone in combination with N-[[[2,5-Dichloro-4-(1,1,2,3,3,3-hexafluoropropoxy)phenyl]amino]carbonyl]-2,6-difluorobenzamide.

In one embodiment, a method of the invention comprises applying the active ingredient N-(cyanomethyl)-4-(trifluoromethyl)-3-pyridinecarboxamide in combination with 1-acetyl-3,4-dihydro-3-[(3-pyridinylmethyl)amino]-6-[1,2,2,2-tetrafluoro-1-(trifluoromethyl)ethyl]-2(1H)-quinazolinone.

In one embodiment, a method of the invention comprises applying the 3 active ingredients N-(cyanomethyl)-4-(trifluoromethyl)-3-pyridinecarboxamide and 1-acetyl-3,4-dihydro-3-[(3-pyridinylmethyl)amino]-6-[1,2,2,2-tetrafluoro-1-(trifluoromethyl)ethyl]-2(1H)-quinazolinone and N-[[[2,5-Dichloro-4-(1,1,2,3,3,3-hexafluoropropoxy)phenyl]amino]carbonyl]-2,6-difluorobenzamide in combination.

In the instance when more than one active ingredient is used, any sequence of application of the active ingredients may be followed. In an embodiment, the combination is applied simultaneously.

A further aspect of the invention is a combination comprising (a) the active ingredients (I) and (II); (b) the active ingredients (I) and (III); (c) the active ingredients (II) and (III); or (d) the active ingredients (I), (II) and (III), optionally further comprising one or more customary formulation components. The combination referred herein may be in the form of a ready-mix or tank-mix.

By the terms "control" or "controlling" it is meant that, insects are repelled, are unable to feed and/or are killed, thus the method of the invention may involve the use of an amount of the active ingredient that is sufficient to repel insects (i.e a repellently effective amount of active ingredient), an amount of the active ingredient that is sufficient to stop insects feeding, or it may involve the use of an insecticidally effective amount of active ingredient (i.e. an amount sufficient to kill insects), or any combination of the above effects.

By virtue of the surprising ability of each of (I) N-(cyanomethyl)-4-(trifluoromethyl)-3-pyridinecarboxamide, (II) N-[[[2,5-Dichloro-4-(1,1,2,3,3,3-hexafluoropropoxy)phenyl]amino]carbonyl]-2,6-difluorobenzamide and (III) 1-acetyl-3,4-dihydro-3-[(3-pyridinylmethyl)amino]-6-[1,2,2,2-tetrafluoro-1-(trifluoromethyl)ethyl]-2(1H)-quinazolinone, either alone or in combination, to control insects of the *Curculionidae* family, the invention also provides a method of protecting a crop of useful plants, wherein said crop is susceptible to and/or under attack from such insects. Such a method comprises applying at least one active ingredient selected from (I) N-(cyanomethyl)-4-(trifluoromethyl)-3-pyridinecarboxamide, (II) N-[[[2,5-Dichloro-4-(1,1,2,3,3,3-hexafluoropropoxy)phenyl]amino]carbonyl]-2,6-difluorobenzamide and (III)1-acetyl-3,4-dihydro-3-[(3-pyridinylmethyl)amino]-6-[1,2,2,2-tetrafluoro-1-(trifluoromethyl)ethyl]-2(1H)-quinazolinone" in free form or in agrochemically acceptable salt form, to said crop and/or said insects.

Applicant has also found that protection of a crop in a plot can be achieved by applying one or more pesticides to only a designated area of the plot. The designated part of the plot is usually the outer most part of the plot, and is generally a border area of sufficient size that penetration of the insects/pests is prevented to the remaining part of the plot. The benefit of spraying the border areas of the plot include a greater ability to control pest infestation because said insects/pests predominantly approach the plot from the periphery of the plot (i.e from the sides of the plot). There is also the benefit that a lower volume of active ingredient could be applied whilst still controlling the insects/pests pressure for the entire plot. Therefore, the designated plot part forms an outer border of the plot, which can uniformly encompass the remaining plot, but embodiments wherein the border is not uniform and wherein the border doesn't completely encompass the remaining plot is also envisaged provided the said insects/pests are controlled to an acceptable level in the plot. Further, the designated plot part doesn't have to form the outer most part of the plot, but that is preferred to minimize the crop damage by the said insects/pests. The area of the designated plot is of such size that acceptable control of the insects/pests is achieved. A skilled person would understand that a plot containing a crop would be applied with a number of pesticides during its growth. The application of the pesticides to a designated plot can be applicable to all pesticide application, but would be more appropriate to those pesticides controlling those insects/pests that predominantly approach the plot from the periphery of the plot; accordingly, the remaining pesticides would be applied as normal, for example, throughout the plot. For example, pesticide A is for control of insects/pests that pests that predominantly approach the plot from the periphery of the plot while pesticide B is broad spectrum fungicide; therefore, pesticide A & B, either simultaneously or in any sequence, would be applied to the designated plot part (i.e a border region), while pesticide B would applied be applied throughout the plot.

Accordingly, the present invention also herein provides a method of protecting a plot of at least five hectares comprising a crop of useful plants susceptible to and/or under attack by insects/pests, said method comprising applying to said plant and/or said insects/pests at least one active ingredient, in free form or in agrochemically acceptable salt form, in a pre-defined plot part that is between 0.5 to 20%, based on area, of the plot, provided said pre-defined plot part forms an outer border of the plot, wherein said insects/pests predominantly approach the plot from the periphery of the plot.

In an embodiment, a method of protecting a plot of at least five hectares comprising a crop of useful plants susceptible to and/or under attack by insects/pests, preferably of the family *Curculionidae,* said method comprising applying to said plant and/or said insects/pests at least one active ingredient selected from (I) N-(cyanomethyl)-4-(trifluoromethyl)-3-pyridinecarboxamide; (II) N-[[[2,5-Dichloro-4-(1,1,2,3,3,3-hexafluoropropoxy)phenyl]amino]carbonyl]-2,6-difluorobenzamide; and (III) 1-acetyl-3,4-dihydro-3-[(3-pyridinylmethyl)amino]-6-[1,2,2,2-tetrafluoro-1-(trifluoromethyl)ethyl]-2(1H)-quinazolinone, in free form or in agrochemically acceptable salt form, in a pre-defined plot part that is between 0.5 to 20%, based on area, of the plot, provided said pre-defined plot part forms an outer border of the plot, wherein said insects/pests predominantly approach the plot from the periphery of the plot.

In a preferred embodiment, the pre-defined plot part that is applied with the one or more active ingredients is between 1 to 20%, based on area, of the plot, especially 5 to 15%. In an embodiment, the plot is between 5 to 10,000, such as at most 50 to 5,000, especially 100 to 1,000, particularly 150 to 500, hectares.

Crops of useful plants that may be protected according to the each and every aspect of invention are those of economic value, in particular cotton plants. In a preferred embodiment, cotton plants are protected by the application of at least one active ingredient selected from (I) N-(cyanomethyl)-4-(trifluoromethyl)-3-pyridinecarboxamide, (II) N-[[[2,5-Dichloro-4-(1,1,2,3,3,3-hexafluoropropoxy)phenyl]amino]carbonyl]-2,6-difluorobenzamide and (III) 1-acetyl-3,4-dihydro-3-[(3-pyridinylmethyl)amino]-6-[1,2,2,2-tetrafluoro-1-(trifluoromethyl)ethyl]-2(1H)-quinazolinone, to the crop.

The control of such insects is particularly important where it has been found that such insects exhibit resistance (or tolerance) to the benchmark insecticides that have hitherto been used for their control. Thus the methods of the invention not only have applicability against *Curculionidae* that are sensitive to insecticides other than the active ingredients of formula (I), formula (II) and formula (III), either alone or in combination, but also against *Curculionidae* that are resistant to such other insecticides.

In a particularly preferred embodiment of any of the aspects of the invention discussed herein, N-(cyanomethyl)-4-(trifluoromethyl)-3-pyridinecarboxamide, N-[[[2,5-Dichloro-4-(1,1,2,3,3,3-hexafluoropropoxy)phenyl]amino]carbonyl]-2,6-difluorobenzamide and 1-acetyl-3,4-dihydro-3-[(3-pyridinylmethyl)amino]-6-[1,2,2,2-tetrafluoro-1-(trifluoromethyl)ethyl]-2(1H)-quinazolinone, either alone or in combination, is used to control insects of the family *Curculionidae,* commonly known as weevil. The invention further provides methods of increasing the yield from crops of useful plants that are under attack by insects from the family *Curculionidae* and/or maintaining yield or reducing yield loss from crops of useful plants that are susceptible to attack by insects of the family *Curculionidae.*

Boll weevil have been shown to preferentially attack flower buds and squares, thus in certain embodiments (according to any aspect of the invention mentioned herein) N-(cyanomethyl)-4-(trifluoromethyl)-3-pyridinecarboxamide, N-[[[2,5-Dichloro-4-(1,1,2,3,3,3-hexafluoropropoxy)phenyl]amino]carbonyl]-2,6-difluorobenzamide and 1-acetyl-3,4-dihydro-3-[(3-pyridinylmethyl)amino]-6-[1,2,2,2-tetrafluoro-1-(trifluoromethyl)ethyl]-2(1H)-quinazolinone, either alone or in combination, is used for insect control in crops of useful plants wherein said plants have flower buds.

Each method of the present invention may be used to control insects of the family *Curculionidae,* in particular the genus *Anthonomus.* In particular, each method of the invention may be used in the control of the following *Anthonomus* species:
*Anthonomus grandis, Anthonomus corvulus, Anthonomus elutus, Anthonomus elongatus, Anthonomus eugenii, Anthonomus consors, Anthonomus haematopus,*
*Anthonomus lecontei, Anthonomus molochinus, Anthonomus morticinus, Anthonomus musculus, Anthonomus nigrinus, Anthonomus phyllocola, Anthonomus pictus,*
*Anthonomus pomorum, Anthonomus quadrigibbus, Anthonomus rectirostris,*
*Anthonomus rubi, Anthonomus santacruzi, Anthonomus signatus, Anthonomus subfasciatus, Anthonomus tenebrosus.* In one embodiment each method of the invention will be used to control *Anthonomus grandis,* which has been shown to attack cotton plants.

Each method of the present invention may also be used to control insects of the family *Curculionidae,* other than *Anthonomus.* In one embodiment each method of the invention will be used to control *Conotrachelus nenuphar.* In one embodiment the methods of the invention will be used to control *Ceutorhynchus spp.* In one embodiment each method of the invention will be used to control *Curculio nucum.*

The active ingredient N-(cyanomethyl)-4-(trifluoromethyl)-3-pyridinecarboxamide and its agrochemically acceptable salts may be made, for example, as described in US 5,360,806. Alternatively, it may be obtained commercially as a formulated composition, for example under the registered trade mark TEPPEKI, BELEAF, CARBINE, TURBINE.

The active ingredient N-[[[2,5-Dichloro-4-(1,1,2,3,3,3-hexafluoropropoxy)phenyl]amino]carbonyl]-2,6-difluorobenzamide and its agrochemically acceptable salts may be made, for example, as described in EP179022. Alternatively, it may be obtained commercially as a formulated composition, for example under the registered trade mark MATCH.

The active ingredient 1-acetyl-3,4-dihydro-3-[(3-pyridinylmethyl)amino]-6-[1,2,2,2-tetrafluoro-1-(trifluoromethyl)ethyl]-2(1H)-quinazolinone and its agrochemically acceptable salts may be made, for example, as described in EP 1097932, or EP1626047. Alternatively, it may be obtained commercially as a formulated composition, for example under the registered trade mark COLT.

The invention also extends to a method for obtaining regulatory approval for the use of one or more of N-(cyanomethyl)-4-(trifluoromethyl)-3-pyridinecarboxamide, N-[[[2,5-Dichloro-4-(1,1,2,3,3,3-hexafluoropropoxy)phenyl]amino]carbonyl]-2,6-difluorobenzamide and 1-acetyl-3,4-dihydro-3-[(3-pyridinylmethyl)amino]-6-[1,2,2,2-tetrafluoro-1-(trifluoromethyl)ethyl]-2(1H)-quinazolinone, to control an insect of the family *Curculionidae,* in particular the species *Anthonomus grandis, Conotrachelus nenuphar, Ceutorhynchus spp.* or *Curculio nucum,* comprising at least one step of referring to, submitting or relying on biological data showing that said active ingredient reduces said insect pressure.

Agrochemically acceptable salts of the active ingredients of formula (I) and formula (II) and formula (III) are, for example, acid addition salts. Those salts are formed, for example, with strong inorganic acids, such as mineral acids, for example perchloric acid, sulfuric acid, nitric acid, nitrous acid, a phosphoric acid or a hydrohalic acid, with strong organic carboxylic acids, such as unsubstituted or substituted, for example halogen-substituted, C₁-C₄ alkanecarboxylic acids, for example formic acid, acetic acid or trifluoroacetic acid, unsaturated or saturated dicarboxylic acids, for example oxalic, malonic, succinic, maleic, fumaric or phthalic acid, hydroxycarboxylic acids, for example ascorbic, lactic, malic, tartaric or citric acid, or benzoic acid, or with organic sulfonic acids, such as unsubstituted or substituted, for example halogen-substituted, C₁-C₄ alkane- or aryl-sulfonic acids, for example methane- or p-toluenesulfonic acid.. Agrochemically acceptable salts of the compound of formula (I) or formula (II) or formula (III) also include salts formed with basic substances, e.g. they include salts of an inorganic or organic base, such as sodium salts, potassium salts, a calcium salts, ammonium salts and dimethylamine salts.

In order to apply an active ingredient to members of the family *Curculionidae* and/or crops of useful plants as required by the methods of the invention, said active ingredient may be used in pure form or, more typically, formulated into a composition which includes, in addition to said active ingredient, a suitable inert diluent or carrier and optionally, a surface active agent (SFA). SFAs are chemicals which are able to modify the properties of an interface (for example, liquid/solid, liquid/air or liquid/liquid interfaces) by lowering the interfacial tension and thereby leading to changes in other properties (for example dispersion, emulsification and wetting). SFAs include non-ionic, cationic and/or anionic surfactants, as well as surfactant mixtures.

The active ingredients (I), (II) and (III), either alone or in any combination, can generally be applied in combination with other pesticides, such as other insecticides, acaricides, and fungicides. The use of the other pesticides would depend on the prevailing pest/insect/fungi pressures in the plot of useful plant crops. The other pesticides may be applied simultaneously to any one of (I), (II) or (III) or sequentially. In the instance, they are applied simultaneously; the composition being applied containing the pesticides may be derived from ready-mix formulation of the desired pesticides or more often derived from a tank-mix of distinct formulations of the desired pesticides. In the instance the pesticides are applied sequentially, the order and frequency of pesticide application of the pesticides would be based on the prevailing pest/insect/fungi pressures in the plot of useful plant crops. For example, in the instance a designated plot part (e.g. an outer border) is applied with pesticide A, then pesticide B, the remaining plot may also be applied only with pesticide B.

Thus in further embodiments according to any aspect of the invention mentioned herein, the active ingredient (I), (II) and (III) or any combination thereof will be in the form of a composition additionally comprising a agriculturally acceptable carrier or diluent.

It is preferred that each composition (both solid and liquid formulations) for use in the invention comprise, by weight, from 0.0001 to 95% (inclusive), more preferably from 1 to 85% (inclusive), for example from 5 to 60% (inclusive), of active ingredient. The composition is generally used in methods of the invention such that the active ingredient is applied at a concentration are from 0.1 to 1000 ppm, preferably from 0.1 to 500 ppm, of active ingredient. In particular, spray mixtures with active ingredient concentrations of 50, 100, 200, 300 or 500 ppm are used. The rates of application per hectare are generally from 1 to 2000 g of active ingredient per hectare, preferably from 75 to 400 g/ha, more preferably from 100 to 200 g/ha, more preferably 80 to 120 g/ha. Rates of application of at least 15, 50, 100, 150, 200, 250, 300, or 400 g of active ingredient per hectare are preferred.

As used herein, the terms "about" or "substantially" when referring to a value or to an amount of area, mass, weight, time, volume, concentration or percentage is meant to encompass variations of in some embodiments ±20%, in some embodiments ±10%, in some embodiments ±5%, in some embodiments ±1%, in some embodiments ±0.5%, and in some embodiments ±0.1% from the specified amount, as such variations are appropriate to perform the disclosed invention.

The compositions can be chosen from a number of formulation types, including dustable powders (DP), soluble powders (SP), water soluble granules (SG), water dispersible granules (WG), wettable powders (WP), granules (GR) (slow or fast release), soluble concentrates (SL), oil miscible liquids (OL), ultra low volume liquids (UL), emulsifiable concentrates (EC), dispersible concentrates (DC), emulsions (both oil in water (EW) and water in oil (EO)), micro-emulsions (ME), suspension concentrates (SC), aerosols, fogging/smoke formulations, capsule suspensions (CS) and seed treatment formulations. The preferred formulation is a water dispersible granule (WG). The formulation type chosen in any instance will depend upon the particular purpose envisaged and the physical, chemical and biological properties of the active ingredients of formula (I), formula (II) and formula (III).

Dustable powders (DP) may be prepared by mixing the active ingredient with one or more solid diluents (for example natural clays, kaolin, pyrophyllite, bentonite, alumina, montmorillonite, kieselguhr, chalk, diatomaceous earths, calcium phosphates, calcium and magnesium carbonates, sulfur, lime, flours, talc and other organic and inorganic solid carriers) and mechanically grinding the mixture to a fine powder.

Soluble powders (SP) may be prepared by mixing the active ingredient with one or more water-soluble inorganic salts (such as sodium bicarbonate, sodium carbonate or magnesium sulfate) or one or more water-soluble organic solids (such as a polysaccharide) and, optionally, one or more wetting agents, one or more dispersing agents or a mixture of said agents to improve water dispersibility/solubility. The mixture is then ground to a fine powder. Similar compositions may also be granulated to form water soluble granules (SG).

Wettable powders (WP) may be prepared by mixing the active ingredient with one or more solid diluents or carriers, one or more wetting agents and, preferably, one or more dispersing agents and, optionally, one or more suspending agents to facilitate the dispersion in liquids. The mixture is then ground to a fine powder. Similar compositions may also be granulated to form water dispersible granules (WG).

Granules (GR) may be formed either by granulating a mixture of the active ingredient and one or more powdered solid diluents or carriers, or from pre-formed blank granules by absorbing the active ingredient (or a solution thereof, in a suitable agent) in a porous granular material (such as pumice, attapulgite clays, fuller's earth, kieselguhr, diatomaceous earths or ground corn cobs) or by adsorbing the active ingredient (or a solution thereof, in a suitable agent) on to a hard core material (such as sands, silicates, mineral carbonates, sulfates or phosphates) and drying if necessary. Agents which are commonly used to aid absorption or adsorption include solvents (such as aliphatic and aromatic petroleum solvents, alcohols, ethers, ketones and esters) and sticking agents (such as polyvinyl acetates, polyvinyl alcohols, dextrins, sugars and vegetable oils). One or more other additives may also be included in granules (for example an emulsifying agent, wetting agent or dispersing agent).

Dispersible Concentrates (DC) may be prepared by dissolving the active ingredient in water or an organic solvent, such as a ketone, alcohol or glycol ether. These solutions may contain a surface active agent (for example to improve water dilution or prevent crystallisation in a spray tank).

Emulsifiable concentrates (EC) or oil-in-water emulsions (EW) may be prepared by dissolving the active ingredient in an organic solvent (optionally containing one or more wetting agents, one or more emulsifying agents or a mixture of said agents). Suitable organic solvents for use in ECs include aromatic hydrocarbons (such as alkylbenzenes or alkylnaphthalenes, exemplified by SOLVESSO 100, SOLVESSO 150 and SOLVESSO 200; SOLVESSO is a Registered Trade Mark), ketones (such as cyclohexanone or methylcyclohexanone) and alcohols (such as benzyl alcohol, furfuryl alcohol or butanol), N-alkylpyrrolidones (such as N-methylpyrrolidone or N-octylpyrrolidone), dimethyl amides of fatty acids (such as C₈-C₁₀ fatty acid dimethylamide) and chlorinated hydrocarbons. An EC product may spontaneously emulsify on addition to water, to produce an emulsion with sufficient stability to allow spray application through appropriate equipment. Preparation of an EW involves obtaining a compound of formula (I) either as a liquid (if it is not a liquid at room temperature, it may be melted at a reasonable temperature, typically below 70°C) or in solution (by dissolving it in an appropriate solvent) and then emulsifiying the resultant liquid or solution into water containing one or more SFAs, under high shear, to produce an emulsion. Suitable solvents for use in EWs include vegetable oils, chlorinated hydrocarbons (such as chlorobenzenes), aromatic solvents (such as alkylbenzenes or alkyl naphthalenes) and other appropriate organic solvents which have a low solubility in water.

Microemulsions (ME) may be prepared by mixing water with a blend of one or more solvents with one or more SFAs, to produce spontaneously a thermodynamically stable isotropic liquid formulation. The active ingredient is present initially in either the water or the solvent/SFA blend. Suitable solvents for use in MEs include those hereinbefore described for use in ECs or in EWs. A ME may be either an oil-in-water or a water-in-oil system (which system is present may be determined by conductivity measurements) and may be suitable for mixing water-soluble and oil-soluble pesticides in the same formulation. A ME is suitable for dilution into water, either remaining as a microemulsion or forming a conventional oil-in-water emulsion.

Suspension concentrates (SC) may comprise aqueous or non-aqueous suspensions of finely divided insoluble solid particles the active ingredient. SCs may be prepared by ball or bead milling the solid active ingredient in a suitable medium, optionally with one or more dispersing agents, to produce a fine particle suspension of the compound. One or more wetting agents may be included in the composition and a suspending agent may be included to reduce the rate at which the particles settle. Alternatively, the active ingredient may be dry milled and added to water, containing agents hereinbefore described, to produce the desired end product.

Aerosol formulations comprise the active ingredient and a suitable propellant (for example n-butane). Active ingredients may also be dissolved or dispersed in a suitable medium (for example water or a water miscible liquid, such as n-propanol) to provide compositions for use in non-pressurised, hand-actuated spray pumps.

The active ingredient may be mixed in the dry state with a pyrotechnic mixture to form a composition suitable for generating, in an enclosed space, a smoke containing the compound.

Capsule suspensions (CS) may be prepared in a manner similar to the preparation of EW formulations but with an additional polymerisation stage such that an aqueous dispersion of oil droplets is obtained, in which each oil droplet is encapsulated by a polymeric shell and contains the active ingredient and, optionally, a carrier or diluent therefor. The polymeric shell may be produced by either an interfacial polycondensation reaction or by a coacervation procedure. The compositions may provide for controlled release of the compound of the active ingredient. Active ingredients may also be formulated in a biodegradable polymeric matrix to provide a slow, controlled release of the compound.

A composition may include one or more additives to improve the biological performance of the composition (for example by improving wetting, retention or distribution on surfaces; resistance to rain on treated surfaces; or uptake or mobility of the active ingredient. Such additives include surface active agents, spray additives based on oils, for example certain mineral oils, natural plant oils (such as soy bean and rape seed oil) and/or modified plant oils (e.g. esterified plant oils), and blends of these with other bio-enhancing adjuvants (ingredients which may aid or modify the action of the active ingredient.

Preferred compositions for use in methods of the invention are composed in particular of the following constituents (throughout, percentages are by weight):
Emulsifiable concentrates (EC):
   active ingredient: 1 to 90%, preferably 5 to 20%
   SFA: 1 to 30%, preferably 10 to 20%
   solvent: 5 to 98%, preferably 70 to 85%
Dusts (DP):
   active ingredient: 0.1 to 10%, preferably 0.1 to 1%
   solid carrier/diluent: 99.9 to 90%, preferably 99.9 to 99%
Suspension concentrates (SC):
   active ingredient: 5 to 75%, preferably 10 to 50%
   water: 94 to 24%, preferably 88 to 30%
   SFA: 1 to 40%, preferably 2 to 30%
Wettable powders (WP):
   active ingredient: 0.5 to 90%, preferably 1 to 80%, more preferably 20 to 30% SFA: 0.5 to 20%, preferably 1 to 15%
   solid carrier: 5 to 99%, preferably 15 to 98%
Granules (GR, SG, WG):
   active ingredient: 0.5 to 60%, preferably 5 to 60%, more preferably 50 to 60% solid carrier/diluent: 99.5 to 40%, preferably 95 to 40%, more preferably 50 to 40%

In preferred embodiments of each aspect of the present invention, the composition can be a SG, WG, WP or EC formulation. In one embodiment, a composition comprising a compound of formula (I) is a WG formulation. In one embodiment, a composition comprising a compound of formula (II) is a EC formulation. In one embodiment, a composition comprising a compound of formula (III) is a SG formulation. In one embodiment, a composition comprising a compound of formula (III) will be a WP formulation.

In one embodiment of the invention, soluble granules of 1-acetyl-3,4-dihydro-3-[(3-pyridinylmethyl)amino]-6-[1,2,2,2-tetrafluoro-1-(trifluoromethyl)ethyl]-2(1H)-quinazolinone preferably comprise about 20% of the active ingredient.

In one embodiment of the invention, water dispersible granules of N-(cyanomethyl)-4-(trifluoromethyl)-3-pyridinecarboxamide preferably comprise about 10% of the active ingredient, more preferably about 50% of the active ingredient.

In an embodiment of the invention, granules of N-(cyanomethyl)-4-(trifluoromethyl)-3-pyridinecarboxamide preferably comprise about 1% of the active ingredient.

Where an active ingredient or a combination thereof described herein is employed in methods of controlling insects of the *Curculionidae* family, and/or methods of enhancing/maintaining yield in crops of useful plants, it is preferred that said active ingredient, combination (or compositions containing such active ingredient or combination) is applied to the crop of useful plants, e.g. for cotton the active ingredient will be applied between BBCH40 (canopy closure) and BBCH69 (end of flowering), more preferably between BBCH51 (first appearance of squares) and BBCH65 (full flowering). The BBCH scale is described by Zadoks et al (1974) Weed Research 14(6), pp415-421.

In each embodiment herein, the active ingredient (I), (II), (III) or any combination thereof may be applied to the plot of crop in the form of a composition alone or together with other pesticides.

In each embodiment, a composition containing pymetrozine is also applied together with any one of the active ingredient (I), (II), (III) or any combination thereof, preferably with lufenuron - whether simultaneously with pymetrozine or in succession. In a preferred embodiment, a combination of lufenuron and pymetrozine is applied to the pre-defined plot part described herein. In an example, the rate of application to the pre-defined plot part can be 10-40 g/ ha of lufenuron and 80 to 120 g/ha of pymetrozine.

In an embodiment, each active ingredient flonicamid and pyrifluquinazon can be applied together with active ingredient lufenuron - whether simultaneously with pymetrozine or in succession. In a preferred embodiment, such a combination is applied to the pre-defined plot part described herein. In an example, the rate of application to the pre-defined plot part can be 10-40 g/ ha of lufenuron and 80 to 120 g/ha of flonicamid or 80 to 120 g/ha of pyrifluquinazon.

In an embodiment, the active ingredient lufenuron can be applied together with at least one other pesticide - whether simultaneously with pymetrozine or in succession. In a preferred embodiment, such a combination is applied to the pre-defined plot part described herein. In an example, the rate of application to the pre-defined plot part can be 10-40 g/ ha of lufenuron.

In each embodiment described herein which comprises applying the active ingredient (II) or a composition thereof, or preparing active ingredient (II) or compositions thereof, the active ingredient (II) can be substituted with at least one active ingredient selected from i) N-[[[3-chloro-4-[1,1,2-trifluoro-2-(trifluoromethoxy)ethoxy]phenyl]amino]carbonyl]-2,6-difluorobenzamide (Novaluron); ii) 2-chloro-N-[[[4-(trifluoromethoxy)phenyl]amino]carbonyl]benzamide (Triflumuron) and iii) N-[[(3,5-dichloro-2,4-difluorophenyl)amino]carbonyl]-2,6-difluorobenzamide (Teflubenzuron).

Various aspects and embodiments of the present invention will now be illustrated in more detail by way of example. It will be appreciated that modification of detail may be made without departing from the scope of the invention.

For the avoidance of doubt, where a literary reference, patent application, or patent, is cited within the text of this application, the entire text of said citation is herein incorporated by reference.

**Examples of formulation compositions are illustrated below (throughout, percentages are by weight):**

| Example F1: Solutions | a) | b) | c) | d) |
|---|---|---|---|---|
| active ingredient | 80% | 10% | 5% | 95% |
| ethylene glycol monomethyl ether | 20% | - | - | - |
| polyethylene glycol (mol. wt 400) | - | 70% | - | - |
| N-methyl-2-pyrrolidone | - | 20% | - | - |
| epoxidised coconut oil | - | - | 1% | 5% |
| petroleum fraction (boiling range 160-190.degree.) | - | - | 94% | - |

These solutions are suitable for application in the form of micro-drops.

| Example F2: Granules | a) | b) | c) | d) |
|---|---|---|---|---|
| active ingredient | 5% | 10% | 8% | 21% |
| Kaolin | 94% | - | 79% | 54% |
| Highly dispersed silicic acid | 1% | - | 13% | 7% |
| Attapulgite | - | 90% | - | 18% |

The active ingredient is dissolved in dichloromethane, the solution is sprayed onto the carrier, and the solvent is subsequently evaporated off in vacuo.

| Example F3: Dusts | a) | b) |
|---|---|---|
| active ingredient | 2% | 5% |
| Highly dispersed silicic acid | 1% | 5% |
| Talcum | 97% | - |
| Kaolin | - | 90% |

Ready-for-use dusts are obtained by intimately mixing the carriers with the active ingredient.

| Example F4: Wettable powders | |
|---|---|
| active ingredient | 25% |
| Sodium sulphate | 5% |
| castor oil polyethylene glycol ether (36-37 mol of ethylene oxide) | 10% |
| silicone oil | 1% |
| Agridex | 2% |
| highly dispersed silicic acid | 10% |
| kaolin powder | 37% |
| sulfite spent lye powder | 5% |
| Ultravon W-300% (disodium salt of 1-benzyl-2 heptadecylbenzimidazole- X,X'-disulfonic acid) | 5% |

The active ingredient is mixed with the other formulation components and the mixture is ground in a suitable mill, affording wettable powders which can be diluted with water to give suspensions of the desired concentration.

| Example F5: Dusts | a) | b) |
|---|---|---|
| active ingredient | 5% | 8% |
| Talcum | 95% | - |
| Kaolin | - | 92% |

Ready-for-use dusts are obtained by mixing the active ingredient with the carrier and grinding the mixture in a suitable mill.

| Example F6: Extruder granules | |
|---|---|
| active ingredient | 10% |
| Sodium lignosulfonate | 2% |
| Carboxymethylcellulose | 1% |
| Kaolin | 87% |

The active ingredient is mixed and ground with the other formulation components, and the mixture is subsequently moistened with water. The moist mixture is extruded and granulated and then the granules are dried in a stream of air.

| Example F7: Coated granules | |
|---|---|
| active ingredient | 3% |
| Polyethylene glycol (mol. wt. 200) | 3% |
| Kaolin | 94% |

The finely ground active ingredient is uniformly applied, in a mixer, to the kaolin moistened with polyethylene glycol. Non-dusty coated granules are obtained in this manner.

| Example F8: Suspension concentrate | |
|---|---|
| active ingredient | 40% |
| Ethylene glycol | 10% |
| Nonylphenol polyethylene glycol | 6% |
| Ether (15 mol of ethylene oxide) | |
| Sodium lignosulfonate | 10% |
| Carboxymethylcellulose | 1% |
| Aqueous formaldehyde solution (37%) | 0.2% |
| Aqueous silicone oil emulsion (75%) | 0.8% |
| Water | 32% |

The finely ground active ingredient is intimately mixed with the other formulation components giving a suspension concentrate from which suspensions of any desired concentration can be obtained by dilution with water.

| Example F9: Emulsifiable concentrates | a) | b) | c) |
|---|---|---|---|
| active ingredient | 25% | 40% | 50% |
| Calcium dodecylbenzenesulfonate | 5% | 8% | 6% |
| Castor oil polyethylene glycol ether (36 mol of ethylene oxide) | 5% | - | - |
| Tristyrylphenol polyethylene glycol ether (30 mol of ethylene oxide | - | 12% | 4% |
| Cyclohexanone | - | 15% | 20% |
| Xylene mixture | 65% | 25% | 20% |

Emulsions of any desired concentration can be produced from such concentrates by dilution with water.

| Example F10: Wettable powders | a) | b) | c) |
|---|---|---|---|
| active ingredient | 25% | 50% | 75% |
| Sodium lignosulfonate | 5% | 5% | - |
| Sodium laurylsulfate | 3% | - | 5% |
| Sodium diisobutylnapthalene-sulfonate | - | 6% | 10% |
| Octylphenol polyethylene glycol ether (7-8 mol of ethylene oxide) | - | 2% | - |
| Highly dispersed silicic acid | 5% | 10% | 10% |
| Kaolin | 62% | 27% | - |

The active ingredient is mixed with the other formulation components and the mixture is ground in a suitable mill, affording wettable powders which can be diluted with water to give suspensions of the desired concentration.

| Example F11: Emulsifiable concentrate | |
|---|---|
| active ingredient | 10% |
| Octylphenol polyethylene glycol ether (4-5 mol of ethylene oxide) | 3% |
| Calcium dodecylbenzenesulfonate | 3% |
| Castor oil polyglycol ether (36 mol of ethylene oxide) | 4% |
| Cyclohexanone | 30% |
| Xylene mixture | 50% |

Emulsions of any required concentration can be obtained from this concentrate by dilution with water.

A pesticide can be formulated for a particular use and be applied in a particular manner depending on the prevailing conditions and pests for control. Examples of pesticide application include foliar spray, treatment of plant propagation material, such as seed, and soil application, such as nursery tray application, in furrow application, soil drenching, soil injection, drip irrigation, and application through sprinklers or central pivot.

### BIOLOGICAL EXAMPLES

### B.1Comparitive example showing BP80s (break points for 80% mortality) for Pyrifluquinazone and Flonicamid.

BP80s (break points for 80% mortality) were obtained for Pyrifluquinazon and Flonicamid against the following pests: *Heliothis virescens, Plutella xylostella, Tetranychus urticae* and *Cydia pomonella*. The specific method used for each pest is outlined below.

*Heliothis virescens* (Tobacco budworm):
ovo-larvicide, feeding/contact activity, curative
Eggs (0-24 h old) are placed in a 24-well microtiter plate on artificial diet and treated with test solutions by pipetting. After an incubation period of 5 days, samples are checked for egg mortality and larval mortality.
Selectable application rates: 500-0.05ppm

*Plutella xylostella* (Diamondback moth):
larvicide, feeding/residual contact activity, preventative
24-well microtiter plates with artificial diet are treated with test solutions by pipetting. After drying, the plates are infested with L2 larvae (10-15 per well). After an incubation period of 5 days, samples are checked for larval mortality.
Selectable application rates: 500-0.05ppm

*Tetranychus urticae* (Two-spotted spider mite): mixed population
feeding/contact activity, preventative
Bean leaf discs on agar in 24-well microtiter plates are sprayed with test solutions. After drying, the leaf discs are infested with mite populations of mixed ages. 8 days later, discs are checked for egg mortality, larval mortality, and adult mortality.
Selectable application rates: 500-0.05ppm

*Cydia pomonella* (codling moth)
larvicide, contact/feeding activity, preventative
Cubes of an artificial diet are coated with a wax layer by dipping the cubes in liquid paraffin (80°C) and sprayed with diluted (5 steps, 1:2 and 1:4) test solutions in an application chamber. The cubes (10 replicates) are infested with 2 L1 larvae 1 day after treatment. Samples are checked 14 days after infestation for mortality.

The BP80s obtained are shown in the table below.

| | ***Heliothis virescens*** | ***Plutella xylostella*** | ***Tetranychus utticae*** | ***Cydia pomonella*** |
|---|---|---|---|---|
| Pyrifluquinazone | >200 ppm | >200 ppm | >200 ppm | n.t. |
| Flonicamid | >200 ppm | >200 ppm | >200 ppm | >50 ppm |

### B.2 Insecticidal activity of Flonicamid against Anthonomus grandis in cotton

Trials were carried out in a randomized complete block design, each comprising of 4 replicates, plot size of 30 m². Application was carried out with a pressurized knap sack sprayer. 200 liters of spray volume was applied per ha. 4 applications were carried out in 5 days interval. Flonicamid was applied as a 50% WG

Efficacy was evaluated 2 days after 2nd application and 4 days after 4th application. 50 squares were counted per plot and the % reduction of damaged squares in comparison to untreated control was calculated after the ABBOTT formula.

| **Product** | **Rate in g ai /ha** | **% reduction of damaged squares )¹: percentage of squares attacked in UTC** | |
|---|---|---|---|
| | | **2 days after 2nd application** | **4 days after 4th application** |
| Flonicamid | 75 | 50 | 57 |
| Untreated control | | 8)¹ | 14)¹ |

### B.3 Insecticidal activity of Flonicamid against Anthonomus grandis in cotton

Trials were carried out in a randomized complete block design, each comprising of 4 replicates and a plot size of 30 m². Application was carried out with a pressurized knap sack sprayer. 200 liters of spray volume was applied per ha. 3 applications were carried out in 5 days interval, the first application at BBCH 51. Flonicamid was applied as a 50%WG.

Efficacy was evaluated 2 days after 2nd and 5 days after 3rd application. 50 squares were counted per plot and the percentage reduction of damaged squares in comparison to untreated control was calculated after the ABBOTT formula.

| **Product** | **Rate in g ai /ha** | **% reduction of damaged squares )¹: percentage of squares attacked in UTC** | |
|---|---|---|---|
| | | **2 days after 2^{nd} application** | **5 days after 3^{rd} application** |
| Flonicamid | 75 | 67 | 52 |
| Untreated control | | 6)¹ | 16.5)¹ |

### B.4 Insecticidal activity of Flonicamid and Pyrifluquinazon against Anthonomus grandis in cotton

Trials were carried out in a randomized complete block design, each comprising of 4 replicates, plot size of 30 m². Application was carried out with a pressurized knap sack sprayer. 200 liters of spray volume was applied per ha. 4 applications were carried out in 5 days interval, the first application at BBCH 51. Flonicamid was applied as a 50%WG, and Pyrifluquinaon as a 10% WP.

Efficacy was evaluated 2 days after 4th and 7 days after 4th application. 50 squares were counted per plot and the percentage reduction of damaged squares in comparison to untreated control was calculated after the ABBOTT formula.

| | | | |
|---|---|---|---|
| **Product** | **Rate in g ai /ha** | **% reduction of damaged squares )¹: percentage of squares attacked in UTC** | |
| | | **2 days after 4^{th} application** | **7 days after 4^{th} application** |
| Flonicamid | 75 | 65 | 50 |
| | 150 | 81 | 52 |
| Pyrifluquinazon | 100 | 77 | 37 |
| | 200 | 85 | 48 |
| Untreated control | | 13)¹ | 23)¹ |

## Claims

1. A method of controlling insects, which comprises applying at least one active ingredient selected from
(I) N-(cyanomethyl)-4-(trifluoromethyl)-3-pyridinecarboxamide;
(II) N-[[[2,5-Dichloro-4-(1,1,2,3,3,3-hexafluoropropoxy)phenyl]amino]carbonyl]-2,6-difluorobenzamide; and
(III) 1-acetyl-3,4-dihydro-3-[(3-pyridinylmethyl)amino]-6-[1,2,2,2-tetrafluoro-1-(trifluoromethyl)ethyl]-2(1H)-quinazolinone;
in free form or in agrochemically acceptable salt form, to insects of the family *Curculionidae.*

2. A method of protecting a crop of useful plants susceptible to and/or under attack by insects of the family *Curculionidae,* which comprises applying to said crop and/or said insects at least one active ingredient selected from
(I) N-(cyanomethyl)-4-(trifluoromethyl)-3-pyridinecarboxamide;
(II) N-[[[2,5-Dichloro-4-(1,1,2,3,3,3-hexafluoropropoxy)phenyl]amino]carbonyl]-2,6-difluorobenzamide; and
(III) 1-acetyl-3,4-dihydro-3-[(3-pyridinylmethyl)amino]-6-[1,2,2,2-tetrafluoro-1-(trifluoromethyl)ethyl]-2(1H)-quinazolinone;
in free form or in agrochemically acceptable salt form.

3. A method of protecting a plot of at least five hectares comprising a crop of useful plants susceptible to and/or under attack by insects/pests, preferably of the family *Curculionidae,* said method comprising applying to said plant and/or said insects/pests at least one active ingredient selected from
(I) N-(cyanomethyl)-4-(trifluoromethyl)-3-pyridinecarboxamide;
(II) N-[[[2,5-Dichloro-4-(1,1,2,3,3,3-hexafluoropropoxy)phenyl]amino]carbonyl]-2,6-difluorobenzamide; and
(III) 1-acetyl-3,4-dihydro-3-[(3-pyridinylmethyl)amino]-6-[1,2,2,2-tetrafluoro-1-(trifluoromethyl)ethyl]-2(1H)-quinazolinone;
in free form or in agrochemically acceptable salt form, in a pre-defined plot part that is between 0.5 to 20%, based on area, of the plot, provided said pre-defined plot part forms the outer border of the plot, wherein said insects/pests predominantly approach the plot from the periphery of the plot.

4. The method according to any one of the preceding claims wherein the active ingredient is in the form of a composition, said composition additionally comprising an agriculturally acceptable diluent or carrier.

5. The method according to any one of the preceding claims wherein the active ingredient is applied at a concentration of between 75 to 400 g/ha, preferably 100 to 200 g/ha.

6. The method according to any one of the preceding claims wherein said active ingredient or composition is formulated as a water dispersible granule.

7. The method according to any one of the preceding claims wherein said crop plant is a cotton plant.

8. The method according to any one of the preceding claims, wherein said insects are of the genus *Anthonomus,* preferably of the species *Anthonomus grandis.*

9. The method according to claim 8, wherein said insects are selected from the group consisting of *Anthonomus corvulus, Anthonomus elutus, Anthonomus elongatus, Anthonomus eugenii, Anthonomus consors, Anthonomus haematopus, Anthonomus lecontei, Anthonomus molochinus, Anthonomus morticinus, Anthonomus musculus, Anthonomus nigrinus, Anthonomus phyllocola, Anthonomus pictus, Anthonomus pomorum, Anthonomus quadrigibbus, Anthonomus rectirostris, Anthonomus rubi, Anthonomus santacruzi, Anthonomus signatus, Anthonomus subfasciatus, Anthonomus tenebrosus.*

10. The method according to claims 1 to 7, wherein said insects are of the species *Conotrachelus nenuphar, Ceutorhynchus spp.,* or *Curculio nucum.*

11. Use of at least one active ingredient selected from
(I) N-(cyanomethyl)-4-(trifluoromethyl)-3-pyridinecarboxamide;
(II) N-[[[2,5-Dichloro-4-(1,1,2,3,3,3-hexafluoropropoxy)phenyl]amino]carbonyl]-2,6-difluorobenzamide; and
(III) 1-acetyl-3,4-dihydro-3-[(3-pyridinylmethyl)amino]-6-[1,2,2,2-tetrafluoro-1-(trifluoromethyl)ethyl]-2(1H)-quinazolinone;
in free form or in agrochemically acceptable salt form, to control insects of the family *Curculionidae.*

12. The use according to claim 11 wherein the insects are selected from *Anthonomus grandis, Conotrachelus nenuphar, Ceutorhynchus spp.,* and *Curculio nucum.*

13. A method for obtaining regulatory approval for the use of one or more of
(I) N-(cyanomethyl)-4-(trifluoromethyl)-3-pyridinecarboxamide;
(II) N-[[[2,5-Dichloro-4-(1,1,2,3,3,3-hexafluoropropoxy)phenyl]amino]carbonyl]-2,6-difluorobenzamide; and
(III) 1-acetyl-3,4-dihydro-3-[(3-pyridinylmethyl)amino]-6-[1,2,2,2-tetrafluoro-1-(trifluoromethyl)ethyl]-2(1H)-quinazolinone;
in free form or in agrochemically acceptable salt form, to control an insect of the family *Curculionidae,* in particular the species *Anthonomus grandis, Conotrachelus nenuphar, Ceutorhynchus spp.,* or *Curculio nucum,* comprising at least one step of referring to, submitting or relying on biological data showing that said active ingredient reduces insect pressure.

14. A method of protecting a plot of at least five hectares comprising a crop of useful plants susceptible to and/or under attack by attack by insects/pests, preferably of the family *Curculionidae,* said method comprising applying to said plant and/or said insects/pests at least one active ingredient, in free form or in agrochemically acceptable salt form, in a pre-defined plot part that is between 0.5 to 20%, based on area, of the plot, provided said pre-defined plot part forms an outer border of the plot, wherein said insects/pests predominantly approach the plot from the periphery of the plot.
